# EUROPEAN PATENT APPLICATION

(11) **EP 3 057 048 A1**
(43) Date of publication of application: **17.08.2016**
(21) Application number: 16155576.8
(22) Date of filing: 12.02.2016
(51) Int. Cl.: G06Q 20/04, G06Q 20/10, G06Q 20/32

(54) **TRANSFER METHOD AND APPARATUS**

(30) Priority: 16.02.2015 CN 201510083656
(71) Applicant: Xiaomi Inc., Beijing 100085 (CN)
(72) Inventor: SUN, Mingze, 100085 Haidian District (CN); HUANG, Yuanyuan, 100085 Haidian District (CN); ZHANG, Yang, 100085 Haidian District (CN)
(74) Representative: Reeve, Nicholas Edward

(57) **Abstract**

Disclosed are a transfer method and apparatus in the field of computer technology. With the method, a contact information page of a first contact is displayed; the contact information page contains a transfer option corresponding to a first account of the first contact (101); when a trigger instruction triggering the transfer option is received, an account Identification (ID) of the first account, information relating to a local login account, and transfer information input by a user are acquired (102); a transfer request including the account ID of the first account, the information relating to the local login account and the transfer information is sent to a server (103). The server is configured for performing the transfer indicated by the transfer information to the first account from the local login account.

## Description

### TECHNICAL FIELD

The present disclosure generally relates to the field of computer technology, and more particularly to a transfer method and apparatus.

### BACKGROUND

With the development of mobile terminal technology, mobile terminals have found increasingly wide application and have become indispensable tools for daily life. Besides mobile communication, multiple other functions, such as Internet-based video watching, information search, and transfer, may also be implemented with a mobile terminal. A transfer function is one of the most important functions in daily life.

An application with a transfer function, such as Alipay, has to be installed on a mobile terminal. During transfer, one may start the Alipay, click on a transfer option in the Alipay, input an account name of a target account, and then perform a transfer operation.

### SUMMARY OF THE INVENTION

Accordingly, the present invention provides a transfer method and apparatus. The invention is defined by the independent claims to which reference should now be made. Advantageous features are set out in the dependent claims.

According to a first aspect, the invention relates to a transfer method, including: displaying a contact information page of a first contact, the contact information page containing a transfer option corresponding to a first account of the first contact; when receiving a trigger instruction triggering the transfer option, acquiring an account Identification (ID) of the first account, information on a local login account, and transfer information input by a user; and sending a server a transfer request carrying the account ID of the first account, the information on the local login account and the transfer information. The server may be configured for performing transfer indicated by the transfer information to the first account from the local login account.

A contact information page of a first contact containing a transfer option corresponding to a first account of the first contact is displayed. When a trigger instruction triggering the transfer option is received, an account ID of the first account, information on a local login account, and transfer information input by a user are acquired. A transfer request carrying the account ID of the first account, the information on the local login account and the transfer information is sent to a server. The server is configured for performing transfer indicated by the transfer information to the first account from the local login account. In this way, transfer to an account corresponding to a contact information page may be triggered through a transfer option on the contact information page without the need to manually input an account name of a target account by a user, thus improving transfer efficiency.

According to an exemplary embodiment, the acquiring the information on the local login account may include: displaying a pre-stored list of funding accounts bound to the local login account; and when receiving a selecting instruction selecting a first funding account in the list of funding accounts, acquiring an account ID of the first funding account and an account ID of the local login account.

According to an exemplary embodiment, the acquiring the information on the local login account may include: determining, in funding accounts bound to the local login account, a second funding account used most recently; and acquiring an account ID of the second funding account and an account ID of the local login account.

According to an exemplary embodiment, the method may further include: receiving a transfer account adding request sent by the server the transfer account adding request carries an account ID of a target account; and adding a transfer option in a contact information page corresponding to the account ID of the target account.

According to a second aspect, the invention relates to a transfer apparatus, including: a displaying module configured for displaying a contact information page of a first contact the contact information page contains a transfer option corresponding to a first account of the first contact; an acquiring module configured for: when receiving a trigger instruction triggering the transfer option, acquiring an account Identification (ID) of the first account, information on a local login account, and transfer information input by a user; and a sending module configured for sending a server a transfer request carrying the account ID of the first account, the information on the local login account and the transfer information. The server may be configured for performing transfer indicated by the transfer information to the first account from the local login account.

The advantages and technical effects of the transfer apparatus according to the invention correspond to those of the methods presented above.

According to an exemplary embodiment, the acquiring module may include: a displaying sub-module configured for displaying a pre-stored list of funding accounts bound to the local login account; and an acquiring sub-module configured for: when receiving a selecting instruction selecting a first funding account in the list of funding accounts, acquiring an account ID of the first funding account and an account ID of the local login account.

According to an exemplary embodiment, the acquiring module may include: a determining sub-module configured for determining, in funding accounts bound to the local login account, a second funding account used most recently; and an acquiring sub-module configured for acquiring an account ID of the second funding account and an account ID of the local login account.

According to an exemplary embodiment, the apparatus may further include an adding module configured for: receiving a transfer account adding request sent by the server the transfer account adding request carries an account ID of a target account; and adding a transfer option in a contact information page corresponding to the account ID of the target account.

According to a third aspect, the invention relates to a transfer apparatus, including: a processor; and a memory configured for storing instructions executable by the processor.

The processor is configured for: displaying a contact information page of a first contact the contact information page contains a transfer option corresponding to a first account of the first contact; when receiving a trigger instruction triggering the transfer option, acquiring an account Identification (ID) of the first account, information on a local login account, and transfer information input by a user; and sending a server a transfer request carrying the account ID of the first account, the information on the local login account and the transfer information. The server may be configured for performing transfer indicated by the transfer information to the first account from the local login account.

In one particular embodiment, the steps of the transfer method are determined by computer program instructions.

Consequently, according to a fourth aspect, the invention is also directed to a computer program for executing the steps of the transfer method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the information medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig.1 is a flow chart showing a transfer method according to an embodiment herein.
Fig.2 is a schematic diagram illustrating an interface display according to an embodiment herein.
Fig.3 is a schematic diagram illustrating a structure of a transfer apparatus according to an embodiment herein.
Fig.4 is a schematic diagram illustrating a structure of a transfer apparatus according to an embodiment herein.
Fig.5 is a schematic diagram illustrating a structure of a transfer apparatus according to an embodiment herein.
Fig.6 is a schematic diagram illustrating a structure of a transfer apparatus according to an embodiment herein.
Fig.7 is a schematic diagram illustrating a structure of a terminal according to an embodiment herein.

Embodiments herein shown in the drawings are elaborated below. The drawings and the description are not intended to limit the scope of the present disclosure in any way, but are intended to illustrate the present disclosure to those skilled in the art.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure.

### Embodiment 1

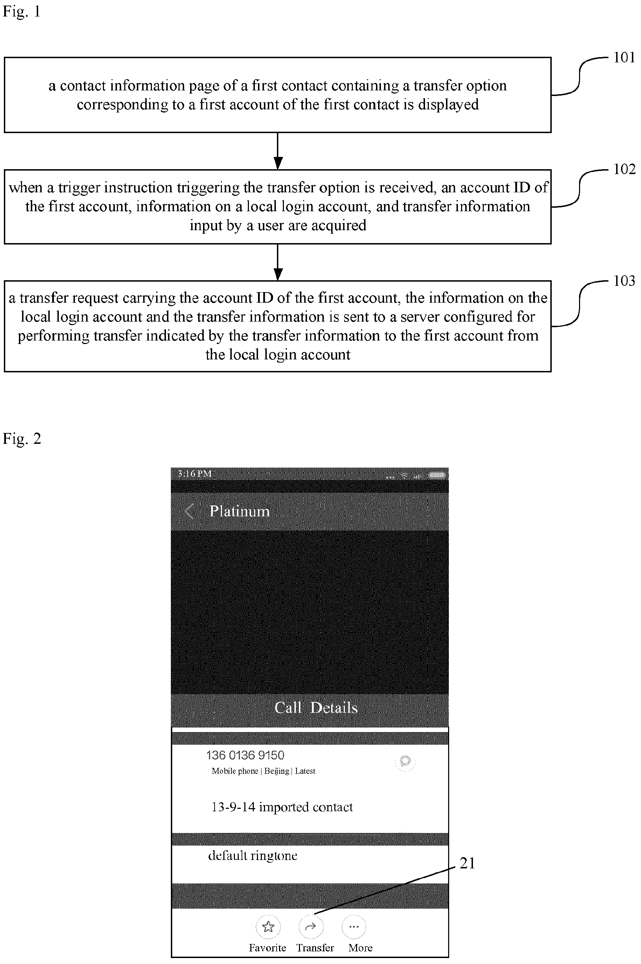

The embodiment provides a transfer method. As shown in Fig.1, a processing flow of the method may include steps as follows.

In step 101, a contact information page of a first contact containing a transfer option corresponding to a first account of the first contact is displayed.

In step 102, when a trigger instruction triggering the transfer option is received, an account identification (account ID) of the first account, information relating to a local login account, and transfer information input by a user are acquired. The local login account may be an account held by a user of a terminal, for example a bank account belonging to the user from which the transfer is to originate, or an electronic money account associated with the terminal. The trigger instruction may be initiated and subsequently received at the terminal by a user pressing an transfer button on the screen of the terminal.

In step 103, a transfer request including the account ID of the first account, the information relating to the local login account and the transfer information is sent to a server. The server is configured for performing transfer indicated by the transfer information to the first account from the local login account.

In the embodiment, a contact information page of a first contact containing a transfer option corresponding to a first account of the first contact is displayed. When a trigger instruction triggering the transfer option is received, an account ID of the first account, information relating to a local login account, and transfer information input by a user are acquired. A transfer request including the account ID of the first account, the information relating to the local login account and the transfer information is sent to a server. The server is configured for performing the transfer indicated by the transfer information to the first account from the local login account. In this way, transfer to an account corresponding to a contact information page may be triggered through a transfer option on the contact information page without the need to manually input an account name of a target account by a user, thus improving transfer efficiency.

### Embodiment 2

The embodiment provides a transfer method. The method may apply to a terminal provided with a contact list. The terminal may be a mobile terminal such as a mobile phone, a tablet computer, or the like. In the embodiment, the method may be executed by a mobile phone, for example. Other situations would be similar.

The processing flow shown in Fig.1 is elaborated below with reference to specific implementations.

In step 101, a contact information page of a first contact is displayed. The contact information page may contain a transfer option corresponding to the first account of the first contact.

In an implementation, a user may install an application with a transfer function on a terminal. The user may register an account with a server via the application and set an account password for the account, so as to perform transfer through the account. The user may also bind, through the application, the registered account with a funding account of the user (such as a bank account). In addition, technical personnel may write program code corresponding to the transfer function in advance in the terminal to allow the mobile terminal to support the transfer function. When the user needs to perform a transfer, the user may click on an icon corresponding to a contact application in the terminal. The terminal will then receive a contact accessing instruction and display a local contact list.

The user may click on a contact needing to receive the transfer in the contact list, and open the contact information page thereof. The contact information page may contain a transfer option corresponding to a first account of the contact needing to receive the transfer. As shown in Fig. 2, a name and a phone number of the contact and the like, as well as a ringtone setting button, a favourite button, a transfer button (namely, the transfer option 21), and the like, may be displayed in the contact information page, such that the user may set the first account or perform transfer to the first account.

In addition, there may be various ways to trigger displaying, by the terminal, the transfer option of the first account. For example, the user may trigger displaying, by the terminal, the transfer option through a long press on a contact in the contact list. When the terminal detects that the user has been touching a certain contact in the contact list for a period of time longer than a preset period of time, a list of operation options may pop up on the current display interface. The list of operation options may include a transfer option, as well as other options such as those for deleting a contact, blacklisting, and messaging. Alternatively, the user may trigger displaying, by the terminal, the transfer option by a sliding operation. The terminal may display the transfer option corresponding to the first account when detecting a sliding touch signal corresponding to a certain contact in the contact list.

In step 102, when a trigger instruction triggering the transfer option is received, an account ID of the first account, information relating to a local login account, and transfer information input by a user are acquired.

The transfer information may include a transfer amount and an account password of the local login account.

In an implementation, the user may click the transfer option on the contact information page of the contact needing to receive transfer. The terminal will then receive the trigger instruction triggering the transfer option and display a transfer page. The user may input, on the transfer page, the transfer information (which may include the transfer amount and the account password of the local login account), and then click on an OK button. The terminal may acquire the account ID of the first account (such as a phone number of the first account), the information relating to the local login account (such as a local phone number), the transfer amount and the account password of the local login account input by the user. The information relating to the local login account may include an account ID of a funding account bound to the first account and the account ID of the local login account.

Optionally, the user may select a desirable funding account as follows. A pre-stored list of funding accounts bound to the local login account may be displayed. When a selecting instruction selecting a first funding account in the list of funding accounts is received, an account ID of the first funding account and an account ID of the local login account may be acquired.

In an implementation, the information relating to the local login account may include the account ID of the local login account and the account ID of the first funding account selected by the user. The user may bind, via the aforementioned application, a registered account to multiple funding accounts of the user (such as bank accounts). After the user clicks on the transfer option on the contact information page of the contact needing to receive the transfer, the terminal will display a transfer amount input page displaying an input box for inputting the transfer amount. The user may input the transfer amount in the input box and click the OK button. The terminal will then display a funding account selection page displaying the list of funding accounts bound to the local login account. The list of funding accounts may include the account ID (such as a bank card number) of a funding account. The funding account selection page may also include the transfer amount and an input box for inputting the account password. The user may input the account password of the local login account, select a desirable funding account (that is, the first funding account) in the list of funding accounts. The terminal will then receive the selecting instruction selecting the first funding account, and then acquire the transfer amount input by the user, the account password of the local login account, the account ID of the first account (such as the phone number of the first account) and the account ID of the local login account (such as the local phone number).

Optionally, the terminal may automatically select a funding account as follows. It may be determined, from the funding accounts bound to the local login account, that a second funding account was used most recently. An account ID of the second funding account and an account ID of the local login account may be acquired.

In an implementation, the information relating to the local login account may include the account ID of the local login account and the account ID of the second funding account determined by the terminal. The user may perform transfer or make a payment using the local login account. The terminal may record the transfer and payment conducted by the user. After the user makes a transfer or payment operation, the terminal may acquire the time the user makes the transfer or payment (that is, the time a funding account is used), and may acquire the funding account used in the operation. The terminal may store the funding account used in the operation and the time the funding account is used correspondingly to establish a correspondence between a funding account and the time the funding account is used. When the terminal receives the trigger instruction triggering the transfer option, the terminal may search the correspondence for the funding account most recently used. The found funding account may serve as the second funding account to be used. The terminal may then acquire the account ID of the second funding account, the account ID of the first account, the account ID of the local login account and the transfer information input by the user for subsequent processing.

In step 103, a transfer request including the account ID of the first account, the information relating to the local login account and the transfer information may be sent to a server. The server may be configured for performing the transfer indicated by the transfer information to the first account from the local login account.

In an implementation, after the terminal acquires the account ID of the first account, the account ID of the local login account, the transfer amount and the account password of the local login account input by the user, the terminal may include the acquired information in the transfer request, and send the transfer request to the server. After the server receives the transfer request sent by the terminal, the server may parse the transfer request to acquire the information therein, and may further authenticate the account ID of the local login account and the account password of the local login account. After the local login account is authenticated, the server may perform transfer according to the account ID of the first account and the transfer amount input by the user.

Optionally, when the user selects a desirable funding account, step 103 may include: sending the server the transfer request including the account ID of the first funding account, the account ID of the first account, the account ID of the local login account and the transfer information.

In an implementation, after the terminal acquires the account ID of the first funding account, the account ID of the first account, the account ID of the local login account and the transfer information, the terminal may include the acquired information in the transfer request and send the transfer request to the server.

Optionally, when the user automatically selects a funding account, step 103 may include: sending the server the transfer request including the account ID of the second funding account, the account ID of the first account, the account ID of the local login account and the transfer information.

In an implementation, after the terminal acquires the account ID of the second funding account, the account ID of the first account, the account ID of the local login account and the transfer information, the terminal may include the acquired information in the transfer request and send the transfer request to the server.

Optionally, the terminal may add a transfer option on a contact information page as follows. The terminal may receive a transfer account adding request sent by the server. The transfer account adding request may include an account ID of a target account. The terminal may add a transfer option in a contact information page corresponding to the account ID of the target account.

In an implementation, when a contact in the contact list has not registered an account with the server via the application with a transfer function, the contact information page corresponding to the contact displays no transfer option. When the contact needs to use the application, the contact may install the application with a transfer function on a terminal. When the contact registers an account with the server via the application, an account registration request will be sent to the server. The account registration request may include the account ID of the to-be-registered account (such as the phone number of the contact), the account password thereof and the like. The server may receive the account registration request of the contact and register the to-be-registered account. The server may also search a locally stored contact list for a contact list containing the contact, and then send a transfer account adding request to the account owning the found contact list. The transfer account adding request may include the account ID of the contact (that is, the account ID of the target account). The terminal of the owner account may then receive the transfer account adding request and add a transfer option on the contact information page corresponding to the target account in the local contact list, such that a transfer to the target account may be performed later.

In the embodiment, a contact information page of a first contact containing a transfer option corresponding to a first account of the first contact is displayed. When a trigger instruction triggering the transfer option is received, an account ID of the first account, information relating to a local login account, and transfer information input by a user are acquired. A transfer request including the account ID of the first account, the information relating to the local login account and the transfer information is sent to a server. The server is configured to perform the transfer indicated by the transfer information to the first account from the local login account. In this way, transfer to an account corresponding to a contact information page may be triggered through a transfer option on the contact information page without the need to manually input an account name of a target account by a user, thus improving transfer efficiency.

### Embodiment 3

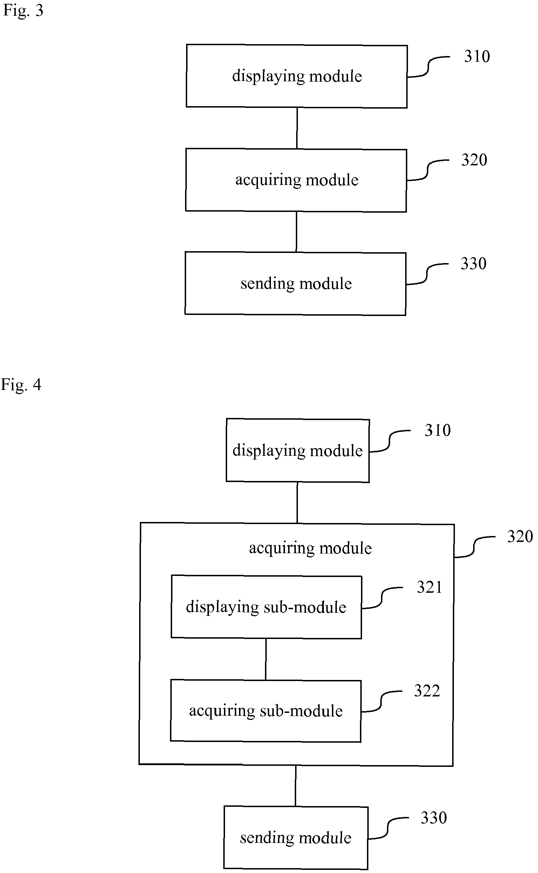

Based on the same technical concept, an embodiment herein also provides a transfer apparatus. As shown in Fig. 3, the apparatus includes a displaying module 310, an acquiring module 320, and a sending module 330.

The displaying module 310 may be configured for displaying a contact information page of a first contact. The contact information page may contain a transfer option corresponding to a first account of the first contact.

The acquiring module 320 may be configured for: when receiving a trigger instruction triggering the transfer option, acquiring an account ID of the first account, information relating to a local login account, and transfer information input by a user.

The sending module 330 may be configured for sending a server a transfer request including the account ID of the first account, the information relating to the local login account and the transfer information. The server may be configured for performing the transfer indicated by the transfer information to the first account from the local login account.

Optionally, as shown in Fig. 4, the acquiring module 320 may include a displaying sub-module 321 and an acquiring sub-module 322.

The displaying sub-module 321 may be configured for displaying a pre-stored list of funding accounts bound to the local login account.

The acquiring sub-module 322 may be configured for: when receiving a selecting instruction selecting a first funding account in the list of funding accounts, acquiring an account ID of the first funding account and an account ID of the local login account.

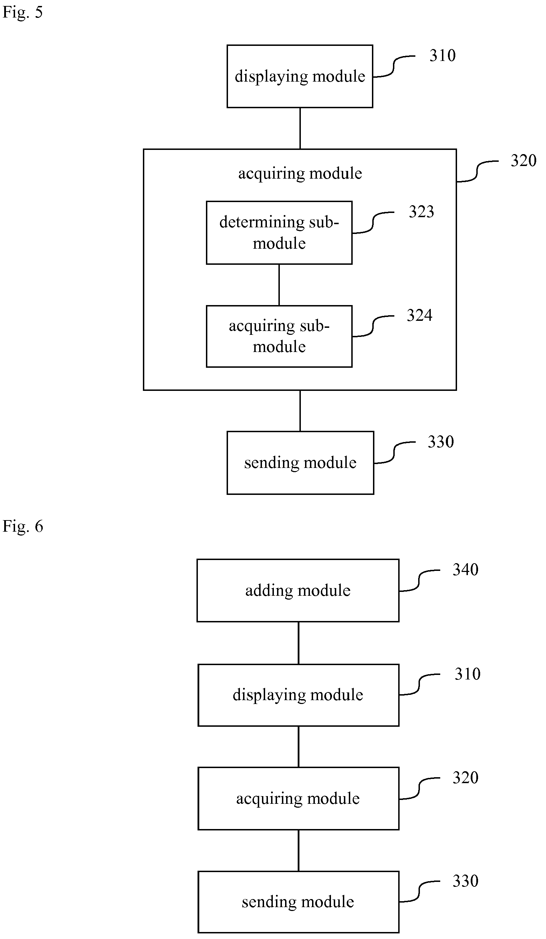

Optionally, as shown in Fig. 5, the acquiring module 320 may include a determining sub-module 323 and an acquiring sub-module 324.

The determining sub-module 323 may be configured for determining, in funding accounts bound to the local login account, a second funding account used most recently.

The acquiring sub-module 324 may be configured for acquiring an account ID of the second funding account and an account ID of the local login account.

Optionally, as shown in Fig. 6, the apparatus may further include an adding module 340 configured for: receiving a transfer account adding request sent by the server, wherein the transfer account adding request carries an account ID of a target account; and adding a transfer option in a contact information page corresponding to the account ID of the target account.

In the embodiment, a contact information page of a first contact containing a transfer option corresponding to a first account of the first contact is displayed. When a trigger instruction triggering the transfer option is received, an account ID of the first account, information relating to a local login account, and transfer information input by a user are acquired. A transfer request including the account ID of the first account, the information relating to the local login account and the transfer information is sent to a server. The server is configured for performing transfer indicated by the transfer information to the first account from the local login account. In this way, transfer to an account corresponding to a contact information page may be triggered through a transfer option on the contact information page without the need to manually input an account name of a target account by a user, thus improving transfer efficiency.

Note that the transfer apparatus according to the embodiment is described with the functional modules merely as an example. In an actual application, the functions may be allocated to be implemented by different functional modules as needed. That is, the internal structure of the apparatus may be divided into different functional modules for implementing all or part of the functions described above. In addition, the transfer apparatus according to the embodiment belongs to the same concept as the transfer method. One may refer to a method embodiment for implementation of the apparatus, which is not repeated here.

### Embodiment 4

An embodiment herein also shows a schematic diagram illustrating a structure of a terminal. The terminal may be a mobile phone or the like.

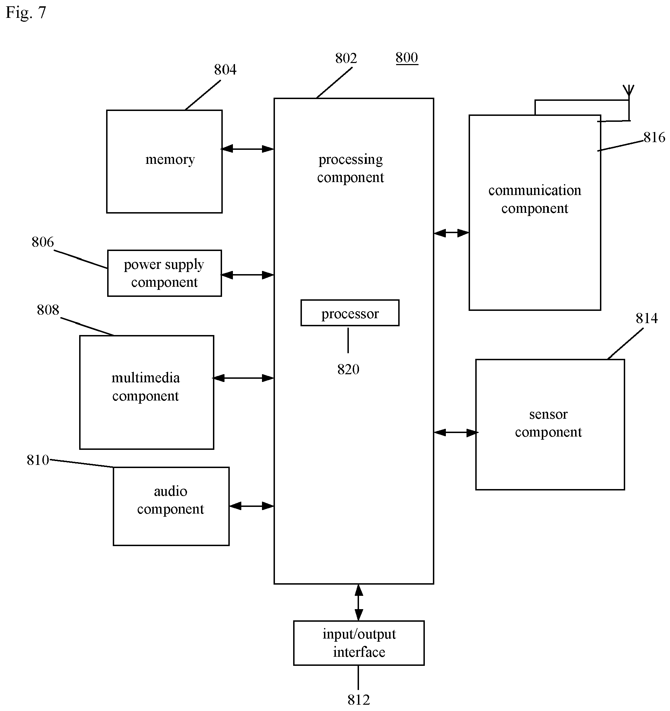

Referring to Fig.7, a terminal 800 may include one or more components as follows: a processing component 802, a memory 804, a power supply component 806, a multimedia component 808, an audio component 810, an input/output (I/O) interface 812, a sensor component 814, and a communication component 816.

Generally the processing component 802 may control the overall operation of the terminal 800, such as operations associated with displaying, phone call, data communication, a camera operation, and recording. The processing component 802 may include one or more processors 820 for executing instructions to implement all or part of the steps of the method. In addition, the processing component 802 may include one or more modules facilitating interaction between the processing component 802 and another component. For example, the processing component 802 may include a multimedia module for facilitating interaction between the multimedia component 808 and the processing component 802.

The memory 804 may be configured for storing various types of data to support the operation on the terminal 800. Such data may include instructions of any application or method operating on the terminal 800, contact data, phonebook data, messages, pictures, videos, and the like. The memory 804 may be realized by any type of volatile or non-volatile storage equipment or combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk or compact disk.

The electric power supply component 806 may supply electric power to various component of the terminal 800. The power supply component 806 may include a power management system, one or more power sources, and other components related to generating, managing and distributing electricity for audio output equipment 800.

The multimedia component 808 may include a screen providing an output interface between the terminal 800 and a user. In some embodiments, the screen may include a Liquid Crystal Display (LCD) and a Touch Panel (TP). If the screen includes a TP, the screen may be realized as a touch screen to receive an input signal from a user. The TP may include one or more touch sensors for sensing touch, slide and gestures on the TP. The touch sensors not only may sense the boundary of a touch or slide move, but also detect the duration and pressure related to the touch or slide move. In some embodiments, the multimedia component 808 may include a front camera and/or a rear camera. When the terminal 800 is in operation, for example a shooting mode or a video mode, the front camera and/or the rear camera may receive external multimedia data. Each of the front camera and the rear camera may be a fixed optical lens system or may have a focal length and be capable of optical zooming.

The audio component 810 may be configured for outputting and/or inputting an audio signal. For example, the audio component 810 may include a microphone (MIC). When the audio output equipment 800 is in an operation mode such as a call mode, recording mode and a voice recognition mode, the MIC may be configured for receiving an external audio signal. The received audio signal may be further stored in the memory 804 or may be sent via the communication component 816. In some embodiments, the audio component 810 further includes a speaker to output audio signals.

The I/O interface 812 may provide an interface between the processing component 802 and a peripheral interface module. Such a peripheral interface module may be a keypad, a click wheel, a button or the like. Such a button may include but is not limited to: a homepage button, a volume button, a start button, and a lock button.

The sensor component 814 may include one or more sensors for providing various state assessment for the terminal 800. For example, the sensor component 814 may detect an on/off state of the terminal 800 and relative positioning of components. For example, the components may be the display and the keypad of the terminal 800. The sensor component 814 may also detect change in the position of the terminal 800 or a component of the terminal 800, whether there is a touch between the terminal and a user, the orientation or acceleration/deceleration of the terminal 800, and change in the temperature of the terminal 800. The sensor component 814 may include a proximity sensor configured for detecting existence of a nearby object without physical contact. The sensor component 814 may also include an optical sensor such as a Complementary Metal-Oxide-Semiconductor (CMOS) or Charge-Coupled-Device (CCD) image sensor used in an imaging application. In some embodiments, the sensor component 814 may also include an acceleration sensor, a gyroscope sensor, a magnetic sensor, a pressure sensor or a temperature sensor.

The communication component 816 may be configured for facilitating wired or wireless communication between the terminal 800 and other equipment. The terminal 800 may access a wireless network based on a communication standard such as WiFi, 2G or 3G, or combination thereof. In an exemplary embodiment, the communication component 816 may receive a broadcast signal or broadcast related information from an external broadcast management system via a broadcast channel. In an exemplary embodiment, the communication component 816 may also include a Near Field Communication (NFC) module for short-range communication. For example, the NFC module may be based on Radio Frequency Identification (RFID), Infrared Data Association (IrDA), Ultra-Wideband (UWB) technology, Bluetooth (BT), and other technologies.

In an exemplary embodiment, the terminal 800 may be realized by one or more of Application Specific Integrated Circuits (ASIC), Digital Signal Processors (DSP), Digital Signal Processing Device (DSPD), Programmable Logic Devices (PLD), Field Programmable Gate Arrays (FPGA), controllers, microcontrollers, microprocessors or other electronic components to implement the method.

In an exemplary embodiment, a non-transitory computer-readable storage medium including instructions, such as a memory 804 including instructions, may be provided. The instructions may be executed by the processor 820 of the terminal 800 to implement the method. For example, the non-transitory computer-readable storage medium may be a Read-Only Memory (ROM), a Compact Disc Read-Only Memory (CD-ROM), a magnetic tape, a floppy disk and optical data storage equipment.

A terminal may execute the transfer method when executing instructions in a non-transitory computer-readable storage medium.

In the embodiment, a contact information page of a first contact containing a transfer option corresponding to a first account of the first contact is displayed. When a trigger instruction triggering the transfer option is received, an account ID of the first account, information relating to a local login account, and transfer information input by a user are acquired. A transfer request including the account ID of the first account, the information relating to the local login account and the transfer information is sent to a server. The server is configured for performing transfer indicated by the transfer information to the first account from the local login account. In this way, transfer to an account corresponding to a contact information page may be triggered through a transfer option on the contact information page without the need to manually input an account name of a target account by a user, thus improving transfer efficiency.

Those skilled in the art will understand that part or all steps for implementing an aforementioned embodiment may be completed by hardware, or by a program instructing related hardware. Such a program may be stored in a computer-readable storage medium. Such a storage medium may be a ROM, a magnetic disk or a compact disk.

Other embodiments of the invention will be apparent to those skilled in the art from consideration of the specification and practice of the invention disclosed here. This application is intended to cover any variations, uses, or adaptations of the invention following the general principles thereof and falling within the scope of the claims, including such departures from the present disclosure as come within known or customary practice in the art.

Although individual modules and units have been described according to their respective functions, a single module or unit may be used in place of one or more of the modules or units described. The modules or units may be implemented in software, hardware, or a combination thereof.

## Claims

1. A transfer method, **characterized in that** the method comprises:
displaying (101) a contact information page of a first contact, wherein the contact information page contains a transfer option corresponding to a first account of the first contact;
when receiving a trigger instruction triggering the transfer option, acquiring (102) an account identification (ID) of the first account, information relating to a local login account, and transfer information input by a user ; and
sending (103) a server a transfer request including the account ID of the first account, the information relating to the local login account and the transfer information, wherein the server is configured to perform the transfer indicated by the transfer information to the first account from the local login account.

2. The method of claim 1, wherein the acquiring (102) the information relating to the local login account comprises:
displaying a pre-stored list of funding accounts bound to the local login account; and
when receiving a selecting instruction selecting a first funding account in the list of funding accounts, acquiring an account ID of the first funding account and an account ID of the local login account.

3. The method of claim 1, wherein the acquiring the information relating to the local login account comprises:
determining, in funding accounts bound to the local login account, a second funding account used most recently; and
acquiring an account ID of the second funding account and an account ID of the local login account.

4. The method of any preceding claim, further comprising:
receiving a transfer account adding request sent by the server, wherein the transfer account adding request includes an account ID of a target account; and
adding a transfer option in a contact information page corresponding to the account ID of the target account.

5. A transfer apparatus, **characterized in that** the apparatus comprises:
a displaying module (310) configured to display a contact information page of a first contact, wherein the contact information page contains a transfer option corresponding to a first account of the first contact;
an acquiring module (320) configured to, when receiving a trigger instruction triggering the transfer option, acquire an account identification (ID) of the first account, information relating to a local login account, and transfer information input by a user; and
a sending module (330) configured to send a server a transfer request including the account ID of the first account, the information relating to the local login account and the transfer information, wherein the server is configured to perform the transfer indicated by the transfer information to the first account from the local login account.

6. The apparatus of claim 5, wherein the acquiring module (320) comprises:
a displaying sub-module (321) configured to display a pre-stored list of funding accounts bound to the local login account; and
an acquiring sub-module (322) configured to, when receiving a selecting instruction selecting a first funding account in the list of funding accounts, acquire an account ID of the first funding account and an account ID of the local login account.

7. The apparatus of claim 5, wherein the acquiring module (320) comprises:
a determining sub-module (323) configured to determine, from the funding accounts bound to the local login account, a second funding account used most recently; and
an acquiring sub-module (324) configured to acquire an account ID of the second funding account and an account ID of the local login account.

8. The apparatus of any one of claims 5 to 7, further comprising an adding module (340) configured to:
receive a transfer account adding request sent by the server, wherein the transfer account adding request includes an account ID of a target account; and
add a transfer option in a contact information page corresponding to the account ID of the target account.

9. A transfer apparatus (800), **characterized in that** the apparatus comprises:
a processor (820); and
a memory (804) configured to store instructions executable by the processor (820),
wherein the processor (820) is configured to:
display a contact information page of a first contact, wherein the contact information page contains a transfer option corresponding to a first account of the first contact;
when receiving a trigger instruction triggering the transfer option, acquire an account identification (ID) of the first account, information relating to a local login account, and transfer information input by a user; and
send a server a transfer request including the account ID of the first account, the information relating to the local login account and the transfer information, wherein the server is configured to perform the transfer indicated by the transfer information to the first account from the local login account.

10. A computer program including instructions for executing the steps of the method according to any one of claims 1 to 4 when said program is executed by a computer.

11. A recording medium readable by a computer and having recorded thereon a computer program including instructions for executing the steps of the method according to any one of claims 1 to 4.
